# EUROPEAN PATENT APPLICATION

(11) **EP 2 156 741 A1**
(43) Date of publication of application: **24.02.2010**
(21) Application number: 09166615.6
(22) Date of filing: 28.07.2009
(51) Int. Cl.: A21D 10/02

(54) **Fully fermented freezer-to-oven bread dough and bread rolls made therefrom**

(30) Priority: 28.07.2008 NL 2001856
(71) Applicant: Bakwerk Beheer B.V., 5253 AD Nieuwkuijk (NL)
(72) Inventor: VLASVELD, Roland Hendrik, 6604 GP, WIJCHEN (NL); van HOOF, Theodorus Petrus Christina, 5473 DC, HEESWIJK-DINTHER (NL)
(74) Representative: Kortekaas, Marcel C.J.A.

(57) **Abstract**

The current invention relates to fully fermented freezer-to-oven bread dough for soft rolls of up to 300 grams containing less than 20 percent by weight fat, wherein the fully fermented freezer-to-oven dough before being frozen has a penetration value measured with a cone-penetrometer (SUR PRN6, Sommer & Runge K.G. Berlin Germany) of at most 200 measurement units. It also relates to a process for the preparation of the bread dough, to the soft rolls made by baking the bread dough and to the method for making the soft rolls.

## Description

The current invention concerns bread dough. More in particular, it concerns fully fermented freezer-to-oven bread dough, which may thus be used to prepare freshly baked bread products on site (e.g., at the grocery store, at home or at a hotel or restaurant) More in particular, it concerns bread dough that can be used for the preparation of soft rolls of up to 300 grams, which definition excludes bread products made from dough containing 20 percent by weight fat, like croissants and such.

### Background Art

Bread is a staple food prepared by baking a dough of flour and water.. Bread is one of the oldest prepared foods.. The development of leavened bread (based on fermentation of the flour by yeast, or bacteria as in sourdough breads) can be traced to prehistoric times. Fresh bread is prized for its taste, aroma and texture. Retaining its freshness is important to keep it appetizing; bread that has stiffened or dried past its prime is said to be stale.. Also the composition of the crumb of the bread is an important, attractive feature of the bread.. Moreover, voids in bread products should be avoided, as consumers will feel cheated.

Bread is a popular food in Western and most other societies. It is often made from a vvheat-flour dough that is cultured with yeast, allowed to rise, and finally baked in an oven. Owing to its high levels of gluten (which give the dough sponginess and elasticity), common wheat (also known as bread wheat) is the most common grain used for the preparation of bread, but bread is also made from the flour of other wheat species (including durum, spelt and emmer), rye, barley, maize (or corn), and oats This is done usually in combination with wheat flour. Also potato flour can and has been used. Although common wheat is best suited for making highly-risen white bread, other wheat species are capable of giving a good crumb.. Spelt bread (Dinkelbrot) continues to be widely consumed in Germany, and emmer bread was a staple food in ancient Egypt. Canadian bread is known for its heartier consistency due to high protein levels in Canadian flour.
- White bread is made from flour containing only the central core of the grain (endosperm),
- Brown bread is made with endosperm and 10% bran. It can also refer to white bread with added colouring (often caramel colouring) to make it 'brown'.
- Wholemeal bread contains the whole of the wheat grain (endosperm and bran). It is also referred to as 'whole grain' or 'whole wheat' bread, especially in North America.
- Wheat germ bread has added wheat germ for flavouring..
- Whole grain bread can refer to the same as 'wholemeal bread', or to white bread with added whole grains to increase its fibre content (i.e as in "60% whole grain bread").
- Granary bread is bread made from granary flour.. It is made from malted white or brown flour, wheat germ and whole grains

Traditionally, bread is made in a process involving mixing the bread ingredients, pre-forming the dough, allowing it to " proof' , and baking the bread at the bakery The traditional bakery, however, is disappearing.

Small artisan bakeries have made place for high technology bakery industries. Moreover, grocery stores and major retailers have started to bring freshly baked products to the consumer Whereas the bakery industry has broken down the process in steps for product optimisation, the retailers have their own demands. They wish to be able to manufacture baked bread without all the (time-consuming) pre-work. The same is true for hotels and restaurants, which like to offer their clients freshly baked products. The traditional bread-baking method has therefore been modified, to allow the preparation of half products. On the other hand, consumers still desire the quality of bread products made at artisan bakeries.

In the early eighties, methods were developed that included partially baked breads These methods included mixing the bread ingredients, pre-forming the dough and allowing it to proof, followed by partially baking the bread at the manufacturer's site. The partially baked bread products were merely taken from the freezer and baked on site (e.g., at the grocery store), eliminating waste, time and overhead costs. Although this by itself was a major step ahead, consumers could still taste the difference between freshly-baked bread and pre-baked bread and thus new methods were developed to improve the quality of the freshly baked products.

NL 1020470C concerns an example of the earlier technology, providing the preparation of soft small bread products, e.g. rolls or buns, by baking pre-baked products inside moisture proof packaging.

More recently Fully Fermented Frozen (FFF) dough products were developed. These FFF dough products are fully pre-proofed breads and rolls, meaning the production facility would blend materials, mix, shape, and fully proof the breads and rolls prior to freezing and boxing. The receiver of these FFF breads would then remove the breads from the frozen case, place them onto trays and bake them in a pre-set oven. The FFF baking is cycled in two stages, typically a low temperature cycle wherein the breads are allowed to defrost, followed by a high temperature cycle to complete the baking.. This concept, also known as Freezer-to-Oven (FTO) has been very successful for the preparation of large breads

In WO 2004/037003 a dough composition and a method of baking yeast-fermented frozen bread products is disclosed. The method entails making a bread product comprising formulating and mixing a bread dough having flour as a major ingredient; pre-forming the dough into open molds shaped suitably for the bread product; pre-proofing the dough; freezing the pre-proofed dough to a temperature below 0 °C; partially defrosting the dough for a period of time of 60 minutes or less; and placing the partially defrosted dough in a pre-heated oven at a temperature of about 170 °C to 180 °C to produce the bread product in less than 3 hours This method and the many variations thereof have opened up a new market for freshly-baked bread. However, this success has been limited to large breads and products such as croissants and the like, with a different texture and a lesser degree of rise. Using the same method for soft rolls and similar small size bread products has inexplicably led to failure through collapse of these products.

In WO 2007/109094 a process is disclosed for FTO products that comprises mixing the dough ingredients comprising yeast and chemical leavening agents; resting the dough to form air cell structure; subjecting the dough to high stress sheeting compressions and freezing the dough. The frozen dough can be directly transferred to an oven without a proofing step. Due to the effect of chemical leavening during the baking, the resulting baked product has desirable texture and taste. On the other hand, this process is limited to cinnamon rolls and pizza' s and such, all made from flat pieces of frozen dough Moreover, this process relies rather heavily on the use of chemical leavening agents. It provides no solution to the mentioned failure of the FTO method for making soft rolls

WO 03/092388 discloses a frozen microwaveable bread product having an open grain structure including from about 40 to about 58% by weight of a cereal grain flour having high protein content. The bakery product has a yeast leavened bread dough matrix including from about 4 to about 8 weight percent of a blend of sweeteners including water activity reducing agents that are effective to bind water within the bakery product. This is done to reduce the amount of free moisture in the bread dough matrix and minimize sublimation of moisture in frozen storage. Also disclosed are methods of making the frozen microwaveable bakery products, including a step of freezing the products (for frozen storage) following the step of proofing the products to a rise of about 30 to about 35% of the actual projected leavening capacity The bakery products therefore need to rise during baking in order to achieve their final dimensions. Unfortunately, this manner of baking may lead once again to failure during the baking of soft rolls Moreover, customers generally prefer " traditionally" fresh baked products over microwaveable bakery products.

EP 0512477 A discloses a method for the production of frozen bread dough. The frozen bread dough has an improved shelf life under frozen storage and is thus very suitable for commercial distribution.. It contains a dough-improving agent that will bind the water during the kneading of the water and the flour in the best possible manner (Free water crystallises during freezing which is believed to cause serious damage to the dough structure) Although this method no doubt improves the shelf life under frozen storage, this document does not address the problem of the inexplicable collapse when soft rolls are made by the FTO method.

NL 1018628C describes a process to bake frozen dough into bread in a low-temperature warm-up phase and high-temperature second phase. This reference describes the baking process, without, however, addressing the problems encountered when making soft rolls.

In SELOMULYO, et al. Frozen bread dough: Effects of freezing storage and doubh improvers. Journal of Cerial Science 2007, vol.45, p.1-17, the effects of freezing storage on the microstructure and baking performance of frozen dough' s is described. This review provides an overview of the activities of dough improvers, including emulsifiers, hydrocolloids and other improvers used in frozen dough applications On the other hand, it again does not explain the phenomena of collapse when soft rolls are made by the conventional FTO methods.

DECOCK, et al Bread technology and sourdough technology Trends in Food Science 2005, vol. 16, p 113-120. provides information on sourdough fermentation, as being one of the oldest cereal fermentations known to mankind. It also discusses the modern-day high technology production of bakery products. It provides an insight in the trends for fermented frozen dough products. It does not deal specifically with the problems of collapse when preparing soft rolls.

In EP 0145367 A a process is disclosed for making yeast-leavened frozen laminated and/or sweet pastry dough.. This reference concerns puff pastries. According to this application, yeast-containing pastry dough is fermented, sheeted, formed into a desired shape, proofed and slowly frozen. The resulting frozen product is freeze-storage stable and capable of being removed from the freezer and baked without an intervening proofing step According to the process of EP0145367, fat and dough additives are mixed or churned at slow speeds followed by the addition of an aqueous yeast solution, flour and the balance of the water. The puff pastry dough is subjected to two fermentation steps. Next, the fermented pastry dough' s are sheeted to a thickness of from 2 to 10 millimetres and any desired roll-in fat ingredient may be coated onto the dough surface.. For instance, the roll-in is coated across two-thirds of the dough sheet and then the uncoated portion of the sheet is folded onto the central third of the sheet followed by folding the remaining coated-third of the sheet on top of the uncoated surface. In this manner, a laminate of three dough layers separated by two fat layers is formed Should additional laminations be desired in the final product, successive sheeting roll-in coating and folding cycles may be repealed Although this reference therefore is an excellent reference for puff pastries having a fat content of more than 20%, it does not provide a suggestion how to prepare soft rolls in a FTO manner without collapse of the soft rolls. Moreover, the texture of croissants and the like are very different from high-rise bread products such as soft rolls.

From the above review of the prior art, it will be clear that there is a demand for soft rolls made from FFF dough, without, however, suffering from collapse during the baking process. The current inventors found a method to solve this problem.

### Disclosure of Invention

Accordingly, the current invention relates to fully fermented freezer-to-oven bread dough for soft rolls of up to 300 grams containing less than 20 percent by weight fat, wherein the fully fermented freezer to oven dough before being frozen has a penetration value measured with a cone-penetrometer (SUR PRN6, Sommer & Runge K.G. Berlin Germany) of at most 200 measurement units. It also relates to a process for the preparation of the bread dough, to the soft rolls made by baking the bread dough and to the method for making the soft rolls.

### Brief Description of Figures in the Drawings

Figure 1 (a) provides a series of baked bread products, of which the first three illustrate traditional buns and rolls, and the last (right) photograph shows the bread product according to the present invention. Figure 1(a) shows the difference in volume achieved with the dough pieces of the current invention upon baking, whereas Figure 1(b) shows the texture of the bread product (cross-section of the soft rolls).

Table 2 lists the penetration value as a function of the time (which corresponds to the degree of rise). At about 90 minutes, the portions of dough have risen to 100% of the desired (final) volume..

Figure 2 provides a series of photographs (order similar as in Figure 1) illustrating the manner by which the unfrozen dough has been tested.

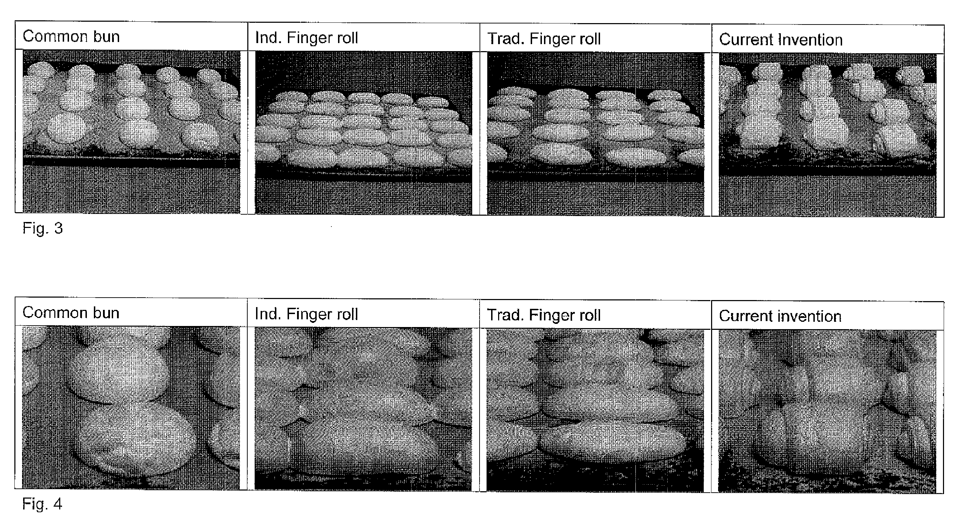

Finally, Figures 3 and 4 illustrate the fully fermented frozen dough portions before baking and the baked bread products obtained after baking Once again, the product on the right is the product according to the invention

### Mode(s) for Carrying Out the Invention

Accordingly, one aspect of the invention is to provide fully fermented freezer-to-oven bread dough and process for the preparation thereof that includes the steps of freezing the fully-fermented bread dough. According to another aspect of the invention bread products are provided, made of the bread dough and prepared by a process that includes the step of baking the dough, for instance in a pre-heated oven with reduced defrost time, without additional pre-fermenting, overnight retarding, complete proofing, and/or additional proofing.

The above and other aspects and advantages of the present invention will become more apparent from the following detailed description of the preferred embodiments.

Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment

As employed herein, the term "fermentation" is meant to include all changes in the dough brought about by the action of yeast and/or bacteria which functions to aerate a dough and ripen the gluten. Total fermentation time includes the time elapsed during fermentation of the dough in bulk, resting or benching and proofing. For the sake of clarity, traditional baking terminology is defined below and employed when appropriate to identify the specific dough treatment steps during which fermentation occurs..

"Fermentation in bulk" occurs after the dough formulation is mixed and before it is divided into separate portions Typically, this is preferred to improve the consistency of the bread. On the other hand, soft rolls may be made without fermentation in bulk.

" Sheeting" or " laminating" is used interchangeably to refer to a compression process wherein (fermented) dough is flattened and rolled. This process is often repeated. Unless indicated otherwise, the dough is flattened to a thickness of between about 3 mm and about 2 cm..

"Resting" is used interchangeably with "benching" to denote periods of time allowed to give the gluten of the flour time to recover from any step such as dividing, moulding, forming, and the like, wherein the dough has been stretched or worked

"Proofing" is the final step before baking or freezing wherein time is allowed for the yeast or other leavening agent to produce more gas to give the correct volume and vesiculation to the moulded or shaped dough portion Proofing if finished when the dough is fully fermented. This may be determined by a simple finger indentation test: fully fermented dough can be indented without feeling resistance, without the dough springing back (insufficient fermentation) and without the dough collapsing (over fermentation). Although it depends on the bread product being made, in typical industrialized production processes this is achieved at about 90 minutes

A "leavening agent" is a compound or mixture of chemical compounds which produces carbon dioxide gas that functions to aerate baked products. Thus, in yeast fermented bread, yeast is a leavening agent. In sourdough bread, this function is taken over by bacteria.

The term "dough" comprises a mixture of flour with other ingredients stiff enough to knead or roll

When considering the formulation of bread, and the relative amounts of other ingredients then flour is always 100%, and the rest of the ingredients are a percent of that amount by weight. Common table bread uses approximately 50% water, resulting in a finely-textured, light, bread. Most artisan bread formulas contain anywhere from 60 to 75% water. In yeast breads, the higher water percentages result in more CO₂ bubbles, and a coarser breadcrumb. One pound (500 g) of flour will yield a standard loaf of bread, or two French loaves.. Calcium propionate is commonly added by commercial bakeries to retard the growth of molds.

The term "bread products" includes small-sized white, wheat, raisin and French- style or Italian-type breads; dinner-rolls, finger rolls or soft-rolls; hamburger rolls; frankfurter rolls and other specialty rolls; sweet dough items such as cinnamon rolls or other plain or filled sweet dough items (e.g., Christmas bread). Although specific to leavened products, it is not limited to yeast-raised dough and includes sourdough bread products, and bread products based on a combination of yeast with bacteria and/or chemical leavening agents.. The current invention is particularly suitable, however, for yeast-raised bread products. The current invention is particularly suitable for small-sized bread products, smaller than 300 grams, preferably in a weight range of from 20 to 200 grams, more preferably in a weight range of from 50 to 100 grams, most preferably about 65 grams.

The present invention may be understood more readily by reference to the following detailed description of the bread products and methods described herein and the examples provided therein. It is to be understood that this invention is not limited to the specific components, articles, processes and/or conditions described, as these may, of course, vary It is also to be understood that the terminology used herein is for the purpose of describing particular embodiments only and is not intended to be limiting.

The dough according to the current invention may have a moisture content in the range of from 45 to 65% by weight, preferably in the range of from 48 to 60% by weight. Use of dough improvers in the dough formulation and/or use of reduced amounts of moisture in the dough formulation are preferred, to improve the shelf-life of the frozen dough.

The bread ingredients used for the preparation of the dough of the current invention include the essential components of flour, salt, leavening agent (yeast and/or bacteria) and water. The flours that can be used in the dough of the present invention include but are not limited to wheat flour, rice flour, corn meal, or based on rye, barley, and oats or any other grain flour conventionally used in bread product dough, as well as mixtures and combinations thereof. Also potato flour and mixtures or combinations thereof may be used. The flour of the present invention may be enriched flour, i.e., flour that contains federally mandated amounts of flour, niacin, ferrous sulphate, riboflavin, enzyme, and thiamine mononitrate foliate. Other types of flours may be substituted for the enriched flour or used in combination with enriched flour. The dough of the present invention may comprise additional gluten or gluten hydrolysates. Gluten is known to contain gliadin and glutenin. Accordingly, these individual components or combinations thereof may be used instead of gluten. The gliadin may be alpha, beta, gamma or omega gliadin or combinations thereof In one embodiment, the dough of the present invention may include flour from one or more grains (such as oats, corn, barley, wheat, rye and the like). The dough may include particulate materials from the grains (such as crushed wheat particles) Further, the dough may also include whole seeds or crushed seeds. Useful seeds are well known in the art and include sunflower seeds, caraway seeds, flax seeds, sesame seeds and the like. Thus, multigrain products can be prepared to improve the taste and/or to add nutritional value.

The preferred flour is wheat flour Preferably, flour is used with a wheat protein level of at least 10%, more preferably of at least 12.5%, still more preferably within the range of from 13 to 15% (percentage based on the flour weight).

The frozen dough of the present invention is preferably yeast-leavened and comprises one or more types of yeast. Yeast can be purchased and used in different forms. The driest commonly used yeast, sometimes referred to as instant yeast, contains 3.5-6.0% moisture Cream yeast contains about 80-85% moisture; compressed yeast contains about 66-73% moisture; and active dry yeast contains about 6-8% moisture Other examples include baker's yeast, protected active dry yeast, frozen yeast and the like. Generally, compressed yeast can be used. However, the invention is in no way limited to compressed yeast

One of ordinary skill in the art can easily determine how much yeast is required, whatever the source of the yeast Suitably, the dough compositions have a yeast content (calculated as " instant" yeast) of about 0.5% to 50%, preferably about 30% to 4.0% by weight, based on the flour weight. However, for a person skilled in the art, it will be obvious that the amount of yeast also depends on the type and desired flavour of the bread product. Again, other leavening agents may be used, for instance in combination with the yeast In such embodiments, the amount of yeast may be less then mentioned here.

Certain bread products are made with bacterial fermentation and/or with a combination of yeast and bacterial fermentation. This may be the case in the production of Panettone, a typical Italian sweet bread, consumed during the Christmas period" The quantity of leavening agents is one that again can easily be determined by one skilled in the art..

The dough may contain minor amounts of fat Fat ingredients that may be used include such materials as butter, margarine and/or vegetable shortening, which may be included as a component of the base dough formulation They may be part of the dough prior to any sheeting operation and/or added as a roll-in ingredient (coated onto a sheeted dough in one or more separate operations). Regular doughs used in the production of soft and sweet rolls will contain from 15% to 25% of fat in the dough itself with little or no fat present as a roll-in

Danish pastry (a yeast-leavened bread product), will normally contain from 5% to 20% fat in the dough itself and an additional 15% to 50% fat present as a roll-in ingredient Such products therefore have a fat content greater than 20%, and are therefore outside the scope of the current invention.. Both pastry dough' s, typically without yeast or other leavening agent, which are used in the production of such non-sweet, laminated pastry products as croissants as well as short pastry will typically have a fat content of from 40 to 60% Again, these products are outside the scope of the current invention.

Other ingredients that can be used include non-flour ingredients such as sugar and sweeteners, diary products like milk, whey, cheese, and casein and the like and egg components, as well as the dough improvers, anti-mold agents, colouring and flavouring agents, stabilizers, emulsifiers and other common ingredients.. It may also contain vitamins such as riboflavin and minerals such as calcium The bread product may also contain seeds and toppings.

A preferred embodiment of this invention is a yeast-leavened dough that is proofed before freezing. Although full fermentation is preferred, also included within the scope of the invention is dough that is proofed to at least 80% of full fermentation (e.g., for 72 minutes for dough reaching full fermentation in 90 minutes), more preferably to at least 90% of full fermentation (e.g., for at least 81 minutes).

The proofing time, when combined with the time the dough or dough ingredients have undergone fermentation (i.e., held at a temperature in excess of 6 °C), will usually be about two hours or less. Indeed, fully fermented dough is typically formulated such that full fermentation is reached in about 90 minutes The proofing time must be long enough to permit the dough to achieve a volume increase of from at least 80% to less than 200% over the volume of the shaped unproofed dough This degree of proof is required in order to obtain a frozen, proofed product which will have good storage stability, and an ability to achieve a controlled positive oven spring, even when baked directly from a frozen state If the proofing step is extended to a point where more than a 200% volume increase is obtained, the proofed dough is excessively weak and subject to: collapse during handling in the plant, either before freezing or during freezing; shrinkage of the frozen proofed dough during prolonged storage; and/or failure of the dough to rise in the oven during baking If the proofing step does not result in a volume increase of at least 80%, the baked product will have a structure which is irregular or shredded in appearance and/or the baked product will likely be too dense.

A crucial aspect to the current invention is that the fully fermented dough is frozen under tension. Tension is believed to cause orientation of the proteins in the bread dough. The manner by which a tension force may be supplied to the bread dough is described hereafter.

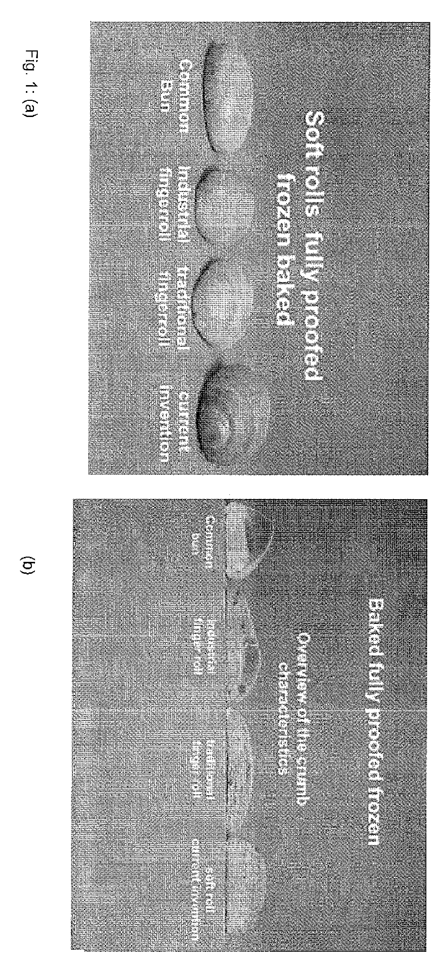

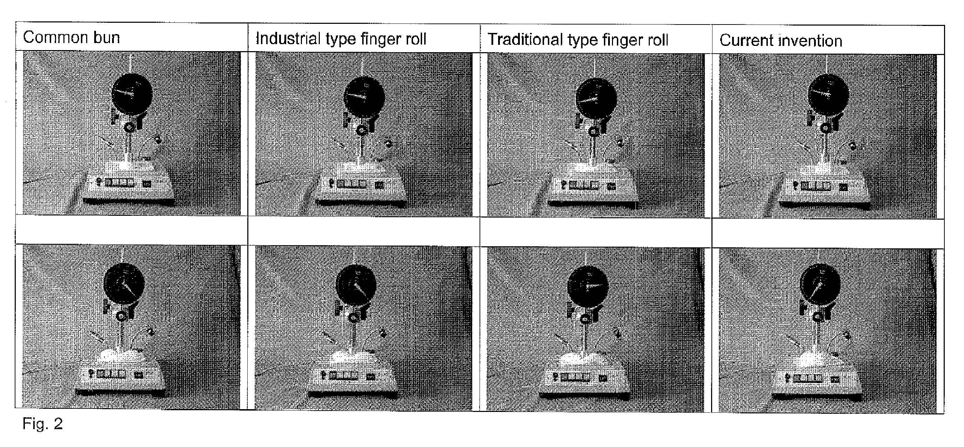

Tension may be measured immediately, but is preferably measured after full fermentation. It is measured by a cone-type penetrometer commonly used in the food industries The penetrometer used here is of the type Sur Berlin PNR6, as manufactured by Sommer & Runge KG, Berlin, Germany, which is a standardized apparatus providing the results in measurement units. The bread dough of the current invention may be characterized by having a penetration value of less than 200 units as measured in the set-up illustrated in the attached Figure 2 upon full fermentation (90 minutes). More specifically, Figure 2 illustrates the penetration determination of 3 common products, from left to right a common bun, a finger roll (modelled), a traditional finger roll (rolled), all outside the scope of the current invention, and - on the right- a piece of dough that is according to the present invention. The results of the penetration determination are presented in Table 2. As might be expected, the penetration values increase as a function of time (which corresponds to the volume increase due to the activity of the leavening agent). However, in the bread dough according to the current invention, the penetration remains much smaller despite the same amount of fermentation. Turning to Figure 3, fully fermented dough is shown in frozen form before baking, whereas in Figure 4 the baked product is shown. However, Figure 1 is the more telling figure, as it clearly shows that the piece of dough according to the current invention has risen to a desirable volume, greater than that of the common soft rolls, without any collapse or voids. The process and bread products of the current invention have excellent volume, open internal cell structure and flavour. Note however that the appearance of the piece of dough according to the invention as shown in the Figures is not characterizing feature; the dough portion may be moulded in any form, provided this is done " under tension" .

The present invention thus also relates to a process for making the frozen dough In general, the process comprises mixing the ingredients to make the dough, resting the dough to generate gas and sheeting or laminating the dough to expel the gas generated during resting, followed by a step wherein the dough is frozen, to produce a frozen dough product which does not need to be proofed prior to baking. The process is discussed in detail in clam 7 and hereafter.

In the first step of the preparation of the dough, the ingredients of the dough are combined together. The combining step may include either combining all of the ingredients at once or combining different combinations of ingredients first and then combining all of the ingredients together. For example, according to one embodiment, certain of the ingredients are combined to form a pre-mix, including for example, the salt, optional conditioners and/r chemical leavening agents. Then, the pre-mix is combined with the remaining ingredients including the flour and yeast The pre-mix and/or the final mixture may include one or more additional ingredients as mentioned before

According to a preferred embodiment of the present invention, the combining step includes mixing part or all the ingredients. The ingredients may be mixed with one another by mixing methods generally known in the art

After combining, the ingredients are mixed by any suitable mixing apparatus, such as a Diosna™ spiral mixer. By way of example only, the ingredients can be mixed for about 2 to 4 minutes on a first speed (low) and then for about 5 to 20 minutes on a second speed (high), which is faster than the first speed For example, the ingredients are mixed for about 2 minutes on low speed and for about 10-12 minutes on high speed

The dough may then be rested in bulk, e.g. at ambient temperature for about 5 to 50 minutes. During the resting step, gas is generated primarily due to the action of yeast or other leavening agent The fermentation during rest time is desirable for obtaining an open cell structure, which reflects favourably in the baked product. This also improves texture and bite characteristics

Following resting of the dough in bulk, if any, the dough according to the process of the invention is sheeted. Typically, a sheeting process is a series of compression steps in which the pressure is applied to the dough so as to flatten it and remove the gas bubbles formed during resting. In the current invention, however, the dough is subjected to a tension force, which is believed to cause some orientation of the proteins in the dough. The tension may be applied by tightly rolling thin stripes of dough. The tension may be measured immediately at this stage, using the aforementioned penetrometer, and should be less than 90 measurement units The stripes of dough may, for instance, have a thickness in the range of from 1 to 6 mm

Although this method may appear similar to that used in a traditional finger roll, it should be noticed that both the initial penetration value as well as the penetration value after full fermentation for a traditional finger roll is much higher.

The sheeted dough is preferably tightly rolled from end to end (also known as torpedoed) into rolls.

The sheeted dough may then be modelled or shaped or cut into the desired shape and size and processed for freezing.. Typically, the dough is frozen, packaged and then kept in long-term storage in the freezer. The dough is frozen by methods known in the art When freezing the dough, a uniform cooling rate throughout the dough is desirable. For prolonged stability, the frozen dough is preferably stored at a temperature in a range of from about -10 to -30 °C In frozen state the dough pieces may be stored for a desired period of time, lasting as long as 14 weeks or more.

This product is ready for baking without additional time consumption on thawing and proofing.. The baking can be carried out in a routine manner in a standard convection oven or any other type of oven, even using a microwave oven Preferably, the frozen dough is baked in an industrial type oven operating at common temperature conditions.. For instance, this may be a pre-heated oven set at an initial oven temperature of about 130 °C to 200 °C, preferably including steam injection for 15-20 seconds to achieve 100% water saturation in the oven atmosphere, whereupon the temperature is increased to at most 270 °C The total process time for the retailers to bake the bread products would be about 13 minutes.

The frozen dough, which is proofed before freezing, eliminates the usual thawing and proofing step, which usually requires 2-12 hours for the thawing and 2-4 hours for the proofing, before the dough is placed in the oven for baking. It goes without saying that this is one of the more important process features for retailers and hotels/restaurants and such, which cannot afford long production times.

The following examples are provided to further illustrate the invention.

Using the same recipe of ingredients, see table 1, dough was made by three traditional methods, resulting in a common bun, a sausage roll and a traditional roll, as well as by the method of the current invention.

**Table 1,**

| dough recipe | |
|---|---|
| Ingredient | amount |
| Flour | 100% by weight |
| salt | 2% |
| moisture | 53% |
| yeast | 6% (fresh yeast) |
| Bread improvers | 15% |

The flour was a wheat flour having a wheat protein level between 13 and 15% (based on the flour weight). The yeast was fresh yeast (with a moisture content of ± 30%). A conventional composition of bread improvers were used comprising milk components, various sugars, vegetable oils and fats, malts, emulsifiers, oxidising and reducing agents, and enzymes These ingredients influence the dough and bread features and characteristics

The dough was mixed using a Diosna™ mixer for 9 minutes at about 25 °C. The same dough was used for all experiments. In fact, it was divided into four parts, which were then used to make common buns; industry-type finger rolls; traditional finger rolls, and the soft rolls according to the present invention.

The dough used for the comparative experiments was divided into portions of appropriate weight (20 to 300 grams, preferably about 65 grams) and shaped or moulded into form. The traditional finger rolls were rolled into shape, but without applying tension.

The dough according to the current invention was kneaded for 9 minutes. Next, it was laminated at least once, by flattening to a thickness of about 3 mm to 5 cm and rolling or folding the dough.

The dough according to the invention was then flattened to a thickness of between 1 and 6 mm, cut into stripes of appropriate weight (20 to 300 gram, preferably about 65 grams) and the product was rolled tightly to apply a tension force.

In each (comparative) experiment about 25 pieces of dough were placed on a tray The moulded portions of dough were proofed for 90 minutes at 30 °C in pre shaped baking pans at a relative humidity of about 80% prior to being deep frozen at -30 °C. The composition of the dough pieces was thus identical, as were the proofing conditions. Penetration measurements were carried out with the SUR PRN6, and the results are listed in Table 2.

After a 14 days freezer storage, final test bakes where carried out in a pre-heated oven set at an initial oven temperature of about 130 °C to 200 °C, preferably including steam injection for 15-20 seconds to achieve 100% water saturation in the oven atmosphere, whereupon the temperature is increased to at most 270 °C The bread products were baked at identical temperature and time conditions within about 13 minutes. The only variable between the comparative tests (common bun, finger roll and traditional finger roll) and the test with a bread dough according to the invention was that the latter has a penetration value of less than 200 measurement units before being frozen.

The product was visually inspected. See figures 1a and 1b. The soft rolls according to the current invention had the best volume retention. They were bigger in size with no collapse. Moreover, all of the soft rolls had excellent crumb composition. A consumer would have not noticed that these products were made from fully fermented freezer-to-oven dough, as the final product was indistinguishable from soft rolls made without the freezing step.

On the other hand, a significant number of the (comparative) common buns, and finger rolls suffered (excessively) from collapse and voids. The end result was much different from that made without the freezing step.

**Table 2**

| Proofing (min) | Common bun | Industrial type finger rolls | Traditional finger rolls | Inventive soft rolls |
|---|---|---|---|---|
| 0 | 104 | 89 | 110 | 83 |
| 10 | 109 | 104 | 150 | 93 |
| 20 | 131 | 118 | 126 | 93 |
| 30 | 140 | 130 | 138 | 104 |
| 40 | 155 | 148 | 183 | 132 |
| 50 | 186 | 167 | 176 | 111 |
| 60 | 190 | 181 | 219 | 146 |
| 70 | 203 | 195 | 232 | 159 |
| 80 | 229 | 237 | 285 | 186 |
| 90 | 243 | 232 | 272 | 185 |

## Claims

1. Fully fermented freezer-to-oven bread dough for soft rolls of up to 300 grams containing less than 20 percent by weight fat, wherein the fully fermented freezer to oven dough before being frozen has a penetration value measured with a cone-penetrometer (SUR PRN6, Sommer & Runge K.G. Berlin Germany) of at most 200 measurement units.

2. Bread dough according to claim 1, comprising flour of common wheat, or rye, barley, maize (or corn), oats or potato and/or combinations thereof.

3. Bread dough according to claim 2, wherein the flour is wheat flour having a wheat protein level of at least 10%, preferably at least 12.5%, more preferably between 13 and 15% (percentage based on the flour weight)..

4. Bread dough according to any one of claims 1 to 3, having a moisture content in the range of from 45 to 65% by weight.

5. Bread dough according to any one of claims 1 to 4, containing yeast as leavening agent, preferably at a content calculated as instant yeast of about 0.5% to 5.0%, based on the flour weight.

6. Bread dough according to any one of claims 1 or 6, containing one or more additional ingredients selected from salt, sugar, sweeteners, diary products, egg components, dough improvers, anti-mold agents, colouring and flavouring agents, stabilizers, emulsifiers, vitamins and minerals.

7. Process for the preparation of fully fermented freezer-to-oven bread dough for soft rolls containing less than 20 percent by weight fat, according to anyone of claims 1 to 6, which process comprises the following steps:
1. mixing bread ingredients comprising a flour and a leavening agent to make the dough,
2. optionally fermenting the dough in bulk, preferably up to 30 minutes,
3. dividing the dough in portions of up to 300 gram,
4. moulding and/or shaping the dough portion,
5. proofing the moulded and/or shaped dough portion to full fermentation, at which stage the dough can be indented without resistance, does not collapse upon indentation, nor spring back, and
6. freezing the fully fermented dough portion,
**characterized in that** the fully fermented freezer-to-oven dough has a penetration value (indentation test) of at most 200 measurement units, which is achieved by sheeting the dough portions in a sheeting step prior to step (4) whereby the dough is flattened, whereupon in step (5) the dough portion is subjected to a tension force, preferably by tightly rolling the flattened dough.

8. The process of claim 7, wherein the dough portion is flattened to a thickness of about 1 to 6 mm.

9. The process of claim 7 or 8, wherein step (1) comprises a first phase wherein at least part of the bread ingredients are mixed, and a second phase wherein the mixture is kneaded into a dough.

10. The process of claim (10), wherein as part of the kneading step in the second phase, the dough is laminated at least once.

11. The process of anyone of claims 7 to 10, wherein the moulded and shaped dough portions are proofed at about 30 °C for about 90 minutes (full fermentation), and are frozen at a temperature of less than -10 °C when full fermentation has been reached.

12. Soft rolls made by baking the fully fermented freezer-to-oven bread dough as claimed in any one of claims 1 to 6 and/or as prepared in any of the claims 7 to 11.

13. Method for making the soft rolls according to claim 12, wherein the fully fermented freezer-to-oven bread dough is baked in an oven at an initial temperature between about 130 and about 200 °C and a final temperature of less than about 270 °C.

14. The method of claim 13, wherein the initial temperature is raised from about 140 °C to about 200 °C in about 2 minutes, whereas the temperature is raised to about 250 °C in about 6 minutes and the total time to bake the soft rolls is about 13 minutes.
